# EUROPÄISCHE PATENTSCHRIFT

(11) **EP 0 690 798 B1**
(45) Veröffentlichungstag und Bekanntmachung des Hinweises auf die Patenterteilung: **23.10.1996**
(21) Anmeldenummer: 94910350.1
(22) Anmeldetag: 17.03.1994
(51) Int. Cl.: B60Q 1/14

(54) **ELEKTRISCHER SCHALTER, INSBESONDERE LENKSTOCKSCHALTER FÜR KRAFTFAHRZEUGE**
ELECTRIC SWITCH, IN PARTICULAR STEERING COLUMN SWITCH FOR MOTOR VEHICLES
COMMUTATEUR ELECTRIQUE, NOTAMMENT COMMUTATEUR POUR COLONNES DE DIRECTION DE VEHICULES A MOTEUR

(30) Priorität: 25.03.1993 DE 4309711
(43) Veröffentlichungstag der Anmeldung: 10.01.1996
(73) Patentinhaber: EATON CONTROLS GmbH & Co. KG, D-55411 Bingen (DE)
(72) Erfinder: MAHR, Herrmann, D-55424 Waldalgesheim (DE)
(74) Vertreter: Becker, Bernd, Dipl.-Ing.
(86) Internationale Anmeldenummer: DE9400304
(87) Internationale Veröffentlichungsnummer: WO9421489

(56) Entgegenhaltungen:
- FR-A- 2 395 587
- FR-A- 2 402 940

## Beschreibung

Die Erfindung bezieht sich auf einen elektrischen Schalter, insbesondere Lenkstockschalter für Kraftfahrzeuge, mit einem im Schaltergehäuse gelagerten Schalthebel zum Schalten mindestens eines elektrischen Schaltkreises, wobei der Schalthebel an seinem freien Ende eine federbelastete Drucktaste zur Beaufschlagung eines weiteren elektrischen Schaltkreises trägt.

Es ist allgemein bekannt, den Schalthebel von Lenkstockschaltern in zwei Bewegungsebenen zu betätigen, damit mehrere Funktionen in übersichtlicher Weise geschaltet werden können. Zusätzlich ist es häufig üblich, den Schalthebel an seinem freien Ende mit einer in Achsrichtung betätigbaren Drucktaste zur Druchführung weiterer Schaltfunktionen zu versehen (siehe beispielsweise FR-A-2 402 940).

Aus der DE-OS 30 45 159 ist ein Lenkstockschalter eines Kraftfahrzeuges mit einem um eine gehäusefeste Achse schwenkbarem Schaltstück bekannt, das zum einen ein nachgiebig angeordnetes, mit einer ortsfesten Profilkurve zusammenwirkendes Rastelement und zum anderen eine Kontaktbrücke für die Fahrtrichtungsblinkerschaltung enthält. Innerhalb des Schaltsückes ist um einen Zapfen, der senkrecht zu der gehäusefesten Achse und parallel zur Verschwenkungsebene des Schaltstückes ausgerichtet ist, ein Betätigungshebel schwenkbar gelagert. Der Betätigungshebel besitzt ein federgespanntes Rastelement, das mit einer Profilkurve im Schaltstück zusammenwirkt. An dem Stirnende des Betätigungshebels liegt der Betätigungsarm einer Schwinge an, die mit ihrem Schaltarm über einen Schieber mit einer Umschaltwippe zur Lichthupenbetätigung und zur Fahrtlichumschaltung in Wirkverbindung steht. Der Betätigungshebel führt somit zwei Bewegungen aus.

Des weiteren ist aus der DE-OS 29 52 298 ein Lenkstockschalter bekannt, der eine Schaltanordnung, mit der zur Fahrtrichtungsanzeige die linken oder rechten Blinklampen angesteuert werden können, und eine Schaltanordnung, mit der die Stromkreise der Scheinwerferlampen beeinflußt werden können, aufweist. Die erstgenannte Schaltanordnung wird durch eine horizontale Verschwenkung und die zweite Schaltanordnung durch eine vertikale Verschwenkung eines Betätigungshebels betätigt. Um diese Bewegung ausführen zu können, ist der Betätigungshebel um eine horizontale Achse drehbar in einem Schaltstück gelagert, das selbst wiederum über zwei Zapfen, die in zwei Bohrungen des Gehäuses eintau-chen, um eine vertikale Achse drehbar ist.

Ferner ist aus der DE-PS 33 43 661 ein Lenkstockschalter bekannt, der zwei miteinander elektrisch verbundene Leiterplatten aufweist, von denen eine beidseitig kaschiert ist, und beiden mit der Bewegung des Betätigungshebels des Schalters in waagerechter und senkrechter Richtung bzw. Ebene mehrere Funktionen, wie Standlicht, Hauptlicht, Abblendlicht, Lichthupe, Blinker rechts und links, geschaltet werden können.

Der Erfindung liegt die Aufgabe zugrunde, einen Schalter der eingangs genannten Art zu schaffen, der bei einer horizontalen und/oder vertikalen Schaltrichtung des Schalthebels und bei einer endseitig an dem Schalthebel angeordneten Drucktaste ein kompaktes Bauvolumen aufweist.

Diese Aufgabe wird erfindungsgemäß dadurch gelöst, daß die Drucktaste über eine federbelastete Schubstange mit einem in der Drehachse des Schalthebels liegenden, schwenkbeweglich gelagerten Querhebel in Wirkverbindung steht, der an seinem verschwenkbaren Ende mit einem Anschlußkontakte beaufschlagenden, federbelasteten Schaltglied verbunden ist.

Durch diese Maßnahmen wird zum einen eine kompakte Bauweise des Schalters und zum anderen eine zuverlässige Kraftübertragung von der Drucktaste zu dem Schaltglied erreicht. Aufgrund der Anordnung des schwenkbeweglichen Querhebels in der Drehachse des Schalthebels kann die Schaltfunktion der Drucktaste in jeder Position des Schalthebels ausgelöst werden und es ist praktisch kein besonderer Einbauraum für den Querhebel erforderlich.

Nach einer vorteilhaften Ausgestaltung der Erfindung weist die Drucktaste eine innere Hülse auf, die verschiebbar und verdrehsicher auf dem Schaft des Schalthebels angeordnet ist und mit einer äußeren Ummantelung den Schalthebelgriff bildet. So ergibt sich eine sinnvolle Integration der Drucktaste in den Schalthebel.

Zur einfachen Realisierung der Federbelastung der Drucktaste weist nach einer vorteilhaften Weiterbildung der Erfindung die Drucktaste in der inneren Hülse einen mittigen Zapfen auf, der sich gegen den Druck einer im Schaft des Schalthebels angeordneten Druckfeder abstützt.

Um eine zuverlässige Schwenkbewegung des Querhebels zu gewährleisten, sind nach einer weiteren Ausgestaltung der erfindungsgemäßen Lösung die Enden des in der vertikalen Drehachse des Schalthebels liegenden Querhebels kugelförmig ausgebildet und jeweils in einer entsprechenden Aufnahme in der oberen Gehäusehälfte sowie in einer entsprechenden Aufnahme im Schaltglied gelagert. Zweckmäßigerweise liegt dabei das freie Ende der Schubstange an dem mittleren Bereich des Querhebels an.

Damit eine einfache Federkraftbeaufschlagung der Schubstange erreicht wird, ist nach einer Weiterbildung der Erfindung die axial abgesetzte Schubstange achsnah im Schalthebel angeordnet und weist einen Ansatz auf, der sich an einer im Schalthebel geführten Feder abstützt.

Damit die durch die federbelastete Drucktaste ausgelöste Schaltfunktion arretiert und wieder gelöst werden kann, steht das der Drucktaste zugeordnete Schaltglied mit seine Schaltstellung fixierenden Rastmitteln in Verbindung. Bevorzugt bestehen die Rastmittel im wesentlichen aus einer Herzkurve und einer mit dieser in Verbindung stehenden federnd beweglichen Rastklinke mit Rastzapfen. Zweckmäßigerweise ist hierbei das Schaltglied in der unteren Gehäusehälfte gegen die Kraft einer Feder horizontal verschiebbar aufgenommen. Weiterhin steht bevorzugt das Schaltglied über eine federbelastete Kontaktrolle mit dem Kontaktträgereinsatz in Verbindung.

Der der Erfindung zugrundeliegende Gedanke wird in der nachfolgenden Beschreibung anhand eines Ausführungsbeispieles, das in der Zeichnung dargestellt ist, näher erläutert. Es zeigt:
- Fig. 1: einen Längsschnitt durch einen Lenkstockschalter,
- Fig. 2: eine vergrößerte Darstellung der Einzelheit II der Fig. 1,
- Fig. 3: einen Schnitt durch die Darstellung nach Fig. 1 gemäß der Linie III-III im vergrößerten Maßstab,
- Fig. 4: einen Schnitt durch die Darstellung nach Fig. 3 gemäß der Linie IV-IV,
- Fig. 5: einen Schnitt durch die Darstellung nach Fig. 3 gemäß der Linie V-V,
- Fig. 6: eine vergrößerte Darstellung der Einzelheit VI nach Fig. 1 und
- Fig. 7: einen Schnitt durch die Darstellung nach Fig. 6 gemäß der Linie VII-VII.

Das Schaltergehäuse des Lenkstockschalters setzt sich aus einer unteren Gehäusehälfte 1 und einer oberen Gehäusehälfte 2, die miteinander verklipst sind, zusammen. Die untere Gehäusehälfte 1 nimmt einen mehrfach abgewinkelten Kontaktträgereinsatz 3 auf, dessen Kontaktbahnen in nach außen geführte Anschlußkontakte 4 übergehen. Der waagerechten Oberseite des Kontaktträgereinsatzes 3 ist ein um eine Drehachse 6 horizontal verschwenkbares, mit einem Schalthebel 10 verbundenes Schaltglied 5 zur Beaufschlagung eines Frontscheibenwischers zugeordnet, wobei im Schaltglied 5 eingesetzte, federbelastete Kontaktbrücken 7 eine sichere Kontaktgabe bewirken. Dem nach unten abgewinkelten, senkrechten Teil des Kontaktbrückeneinsatzes 3 ist ein Schaltglied 8 für die Tippschaltung des Frontscheiben/Heckscheiben-Wischers zugeordnet, das in gehäuseseitigen Führungen vertikal bewegbar ist. Dazu dient ein verlängerter Steg 9 des im Schaltglied 5 federbelastet gelagerten, vertikal verschwenkbaren Schalthebels 10. Der Steg 9 greift in eine zugehörige Aussparung des Schaltgliedes 8 ein. Im Schaltglied 8 sind federbelastete Kontaktrollen 13 zur Beaufschlagung der entsprechenden Kontaktbahnen des Kontaktträgereinsatzes 3 angeordnet. Das im Innern des Schaltgliedes 5 liegende Ende des Schalthebels 10 nimmt ein durch eine Druckfeder 50 belastetes Rastelement 51 mit einer Rolle 52 auf, die mit einer im Schaltglied 5 eingeformten Rastkurve 53 zusammenwirkt. Des weiteren weist das Schaltglied 5 ein federbelastetes Rastelement 11 mit einer Rolle 54 auf, die mit einer in der oberen Gehäusehäfte 2 eingeformten Rastkurve 12 zusammenwirkt. Die Lagerstellen für das Schaltglied 5 und den im Schaltglied 5 gelagerten Schalthebel 10 überkreuzen sich, wodurch der Schalthebel sowohl horizontal als auch vertikal bewegt werden kann.

Zur Beaufschlagung der Schaltung eines Heckscheibenwischers ist dem Kontaktträgereinsatz ein weiteres, in der unteren Gehäusehälfte 1 angeordnetes Schaltglied 14 zugeordnet, das gegen die Kraft einer Feder 15 horizontal verschiebbar ist und über eine federbelastete Kontaktrolle 16 in der Schaltstellung eine sichere elektrische Verbindung mit den entsprechenden Kontaktbahnen des Kontaktträgereinsatzes 3 herstellt. Die Verschiebung des Schaltgliedes 14 erfolgt über eine kugelförmige Aufnahme 17 des Schaltgliedes 14, in die ein durch einen entsprechenden Durchbruch 55 des Schalthebels 10 geführter Querhebel 18 mit einem kugelförmigen Ende 19 eingreift. Der Querhebel 18 lagert mit seinem anderen kugelförmigen Ende 20 in einer kugelförmigen Aufnahme 21 in der oberen Gehäusehälfte 2. Etwa in der Mitte des Querhebels 18 liegt eine längs im Schalthebel 10 gelagerte und freibeweglich federbelastete Schubstange 22 an, die mit ihrer Verlängerung an eine Drucktaste 23 geführt ist und mit dieser gegen die Wirkung einer Feder 24 verschoben werden kann. Die Drucktaste 23 ist mit einer inneren Hülse 25 auf dem Schalthebel 10 leicht beweglich geführt und bildet mit einer äußeren Ummantelung einen Schaltergriff 26. Die Drucktaste 23 kann in jeder beliebigen Stellung des Schalthebels 10 gedrückt und somit ihre zugehörige Schaltfunktion ausgelöst werden.

Ein Schaltring 27 dient der Einstellung verschiedener Geschwindigkeitsstufen des Frontscheibenwischers. Der Schaltring 27 ist dabei um den Schalthebel 10 zwischen zwei ebenfalls um den Schalthebel 10 ortsfest angeordneten Hülsen 28, 29 drehbeweglich gelagert. Durch den Einsatz von federbelasteten Rastmitteln 30, 31 kann der Schaltring 27 stufenweise auf die gewünschte Geschwindigkeit des Frontscheibenwischers eingestellt werden, wobei der Schaltring mit entsprechenden Kontaktgabemitteln 56 zusammenarbeitet.

Zur Vermeidung von Verschmutzungen durch Staub und dergleichen an den Kontaktstellen auf dem Kontaktträgereinsatz 3 sind die offene Seite der verbundenen Gehäusehälften 1 und 2, durch die sich der Schalthebel 10 erstreckt, und die den Schalthebel 10 umgebende Griffhülse 28 von einer gemeinsamen, flexiblen Manschette 32 formschlüssig umgeben.

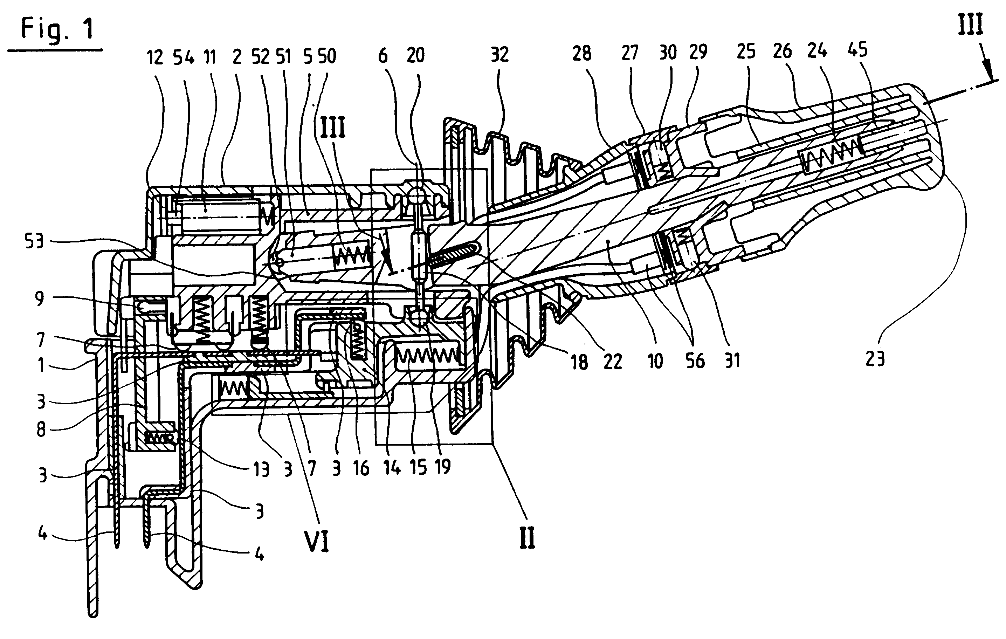

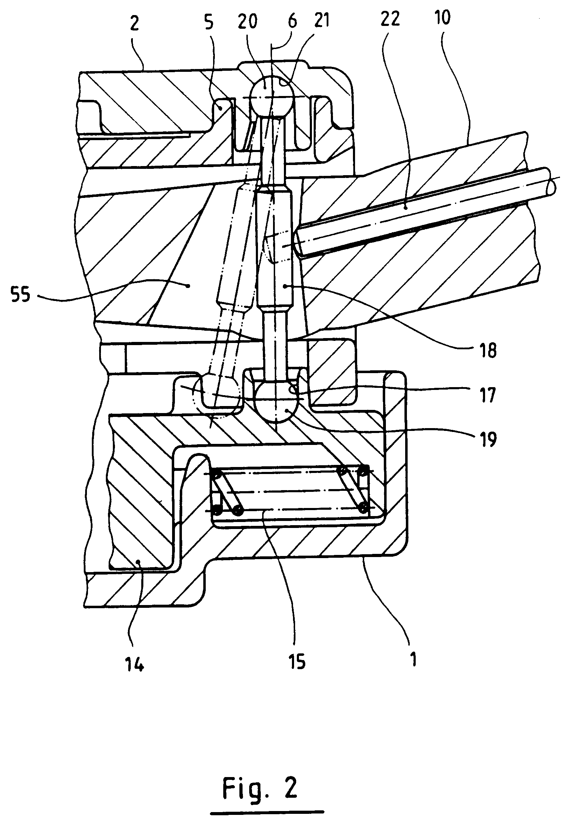

Bei der in Fig. 2 gezeigten vergrößerten Darstellung der Einzelheit II der Fig. 1 ist die Bewegungsmöglichkeit des Querhebels 18 im Schalthebel 10 ersichtlich. Während das obere kugelförmige Ende 20 des Querhebels 18 ortsfest, aber drehbeweglich in der Aufnahme 21 der oberen Gehäusehälfte 2 fixiert ist, bewegt sich das untere kugelförmige Ende 19 des Querhebels 18 bei Verschiebung der Schubstange 22 durch Betätigen der Drucktaste 23 in die strichpunktiert eingezeichnete Lage und verschiebt dabei das Schaltglied 14 über die Aufnahme 17 gegen den Druck der Feder 15 in die gewünschte Schaltstellung.

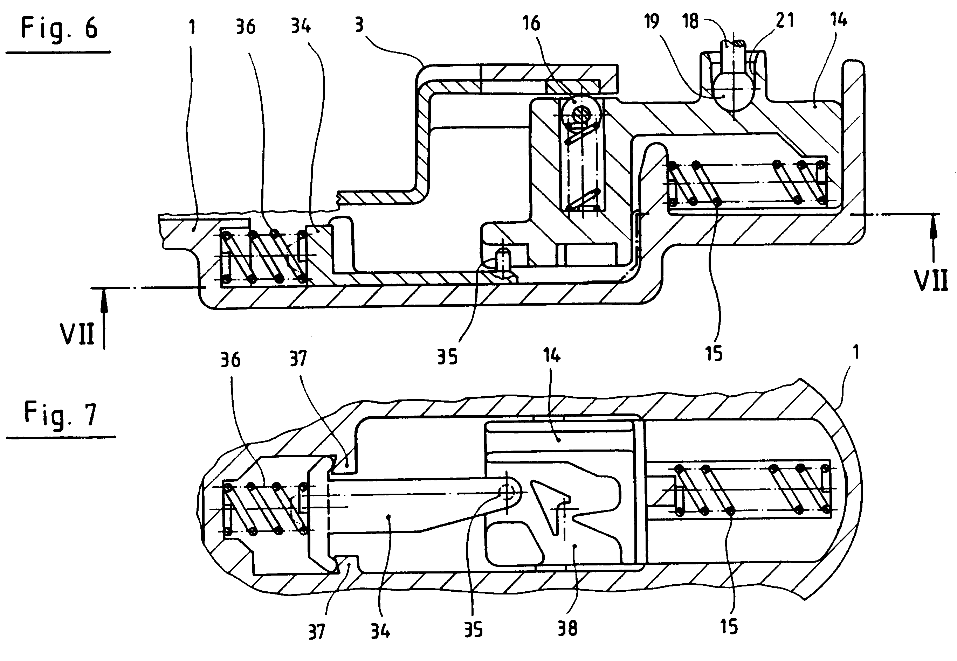

In Fig. 6 sind in einer vergrößerten Darstellung der Einzelheit VI der Fig. 1 die näheren technischen Details im Bereich des Schaltgliedes 14 dargestellt. Bei Verschiebung des Schaltgliedes 14 in die Schaltstellung wird die im Schaltglied 14 eingesetzte federbelastete Kontaktrolle 16 in den Bereich der zugeordneten Kontaktbahnen des Kontaktträgereinsatzes 3 gebracht. Im unteren Bereich des Schaltgliedes 14 sind Rastmittel 34 bis 38 vorgesehen, die das Schaltglied 14 in der Schaltstellung fixieren. In der Figur 7 sind die Rastmittel 34 bis 38 näher erkennbar. Sie bestehen im wesentlichen aus einer auf der unteren Gehäusehälfte 1 angeordneten Rastklinke 34, die einen Rastzapfen 35 trägt, einer Feder 36, die die Rastklinke 34 in der unteren Gehäusehälfte 1 gegen Anschläge 37 federnd lagert, und einer im unteren Bereich des Schaltgliedes 14 befindlichen Herzkurve 38, in die der Rastzapfen 35 eingreift. Einmaliges Drücken der Drucktaste 23 bewirkt das Rasten des Schaltgliedes 14 in der Schaltstellung, und mit einem weiteren Druck auf die Drucktaste 23 erfolgt über die Herzkurve 38 eine Entrastung des Schaltgliedes 14 und anschließend die Rückverschiebung des Schaltgliedes 14 in die Ruhestellung durch die Feder 15.

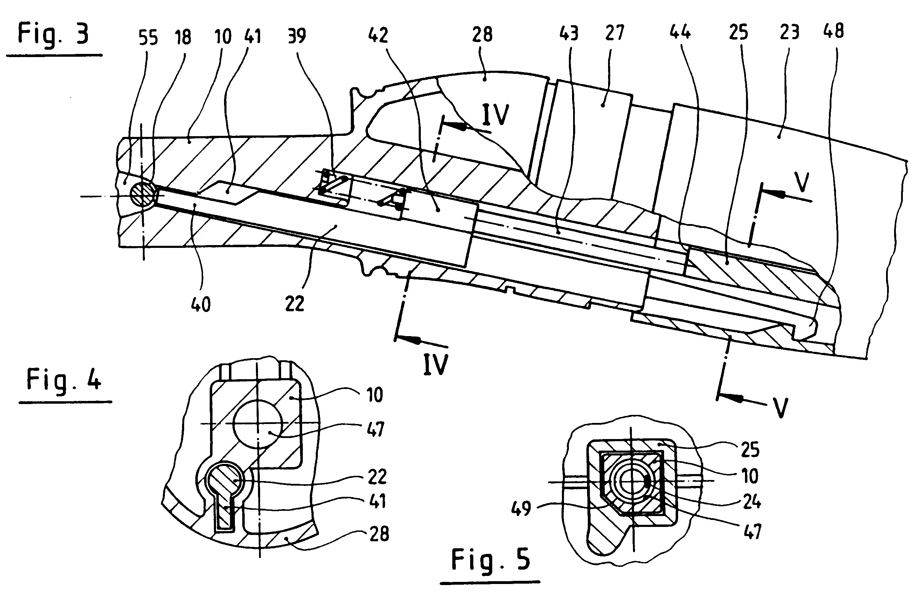

Bei der in Fig. 3 gezeigten Teilansicht des Schalthebels 10 im Schnitt ist die Ausgestaltung und die Lage der Schubstange 22 im Schalthebel 10 erkennbar. Die Schubstange 22 besteht aus einem flachen Teilstück 40, das asymmetisch in einer Führung 41 im Schalthebel 10 geführt wird, einem Ansatz 42 und einer Verlängerung 43, die achsnah an der Stirnseite 44 der inneren Hülse 25 der Drucktaste 23 anliegt. Eine Feder 39, die gegen den Ansatz 42 der Schubstange 22 drückt, bewirkt die Rückführung der Schubstange 22 in ihre Ausgangslage und eine ständige Wirkverbindung mit der Drucktaste 23. Begrenzt wird diese Schubbewegung durch die Drucktaste 23, die mittels Rastklips 48 auf dem Schalthebel 10 gehalten und gesichert ist. Wie aus Fig. 1 erkennbar ist, weist die Drucktaste 23 in der inneren Hülse 25 einen mittigen Zapfen 45 auf, der sich axial auf die im Schalthebel 10 eingesetzte Druckfeder 24 abstützt und so die Drucktaste 23 in ihrer Grundstellung am Anschlag der Rastklipsung 48 (Fig. 3) hält.

In Fig. 4 ist der Querschnitt durch den Schalthebel 10 und die Schubstange 22 gemäß der Linie IV-IV der Fig. 3 veranschaulicht. Der Schalthebel 10 weist einen rechteckigen Querschnitt auf, der für die innere Hülse 25 der Drucktaste 23 mit ebenfalls rechteckigem Querschnitt eine gute Führung und Verdrehsicherung bietet. Die ebenfalls verdrehsicher gestaltete Schubstange 22 ist zwischen dem Kern des Schalthebels 10 und der angeformten Hülse 28 angeordnet. Zentrisch und axial im Kern des Schalthebels 10 ist ein Sackloch 47 eingefügt, in dem die Aufnahme der Druckfeder 24 zur Rückstellung der Druckstage 23 vorgesehen ist.

Der im Querschnitt durch den Schalthebel 10 und die Drucktaste 23 gemäß der Linie V-V der Fig. 3 ist in Fig. 5 gezeigt. Die innere Hülse 25 der Drucktaste 23 ist um den Querschnitt des Schalthebels 10 verschiebbar geführt. Weiterhin ist die in das Sackloch 47 eingesetzte Druckfeder 24 erkennbar. Die miteinander korrespondierenden Abschrägungen 49 am Schalthebel 10 und an der Hülse 25 erleichtern den montagegerechten Einbau der Schubstange 22.

## Patentansprüche

1. Elektrischer Schalter, insbesondere Lenkstockschalter für Kraftfahrzeuge, mit einem im Schaltergehäuse (1, 2) gelagerten Schalthebel (10) zum Schalten mindestens eines elektrischen Schaltkreises, wobei der Schalthebel (10) an seinem freien Ende eine federbelastete Drucktaste (23) zur Beaufschlagung eines weiteren elektrischen Schaltkreises trägt, dadurch gekennzeichnet, daß die Drucktaste (23) über eine federbelastete Schubstange (22) mit einem in der Drehachse (6) des Schalthebels (10) liegenden, schwenkbeweglich gelagerten Querhebel (18) in Wirkverbindung steht, der an seinem verschwenkbaren Ende mit einem Anschlußkontakte (4) beaufschlagenden, federbelasteten Schaltglied (14) verbunden ist.

2. Elektrischer Schalter nach Anspruch 1, dadurch gekennzeichnet, daß die Drucktaste (23) eine innere Hülse (25) aufweist, die verschiebbar und verdrehsicher auf dem Schaft des Schalthebels (10) angeordnet ist und mit einer äußeren Ummantelung den Schaltergriff (26) bildet.

3. Elektrischer Schalter nach den Ansprüchen 1 und 2, dadurch gekennzeichnet, daß die Drucktaste (23) in der inneren Hülse (25) einen mittigen Zapfen (45) aufweist, der sich gegen den Druck einer im Schaft des Schalthebels (10) angeordneten Druckfeder (24) abstützt.

4. Elektrischer Schalter nach einem der Ansprüche 1 bis 3, dadurch gekennzeichnet, daß die Enden (19, 20) des in der vertikalen Drehachse (6) des Schalthebels (10) liegenden Querhebels (18) kugelförmig ausgebildet, und jeweils in einer entsprechenden Aufnahme (21) in der oberen Gehäusehälfte (2) sowie in einer entsprechenden Aufnahme im Schaltglied (14) gelagert sind.

5. Elektrischer Schalter nach einem der Ansprüche 1 bis 4, dadurch gekennzeichnet, daß das freie Ende der Schubstange (22) an dem mittleren Bereich des Querhebels (18) anliegt.

6. Elektrischer Schalter nach einem der Ansprüche 1 bis 5, dadurch gekennzeichnet, daß die axial abgesetzte Schubstange (22) achsnah im Schalthebel (10) angeordnet ist und einen Ansatz (42) aufweist, der sich an einer im Schalthebel (10) geführten Feder (39) abstützt.

7. Elektrischer Schalter nach einem der Ansprüche 1 bis 7, dadurch gekennzeichnet, daß das Schaltglied (14) mit seine Schaltstellung fixierenden Rastmitteln (34, 38) in Verbindung steht.

8. Elektrischer Schalter nach einem der Ansprüche 1 bis 7, dadurch gekennzeichnet, daß die Rastmittel (34 bis 38) im wesentlichen aus einer Herzkurve (38) und einer mit dieser in Verbindung stehenden federnd beweglichen Rasthebel (34) mit Rastzapfen (35) bestehen.

9. Elektrischer Schalter nach einem der Ansprüche 1 bis 8, dadurch gekennzeichnet, daß das Schaltglied (14) in der unteren Gehäusehälfte (1) gegen die Kraft einer Feder (15) horizontal verschiebbar aufgenommen ist.

10. Elektrischer Schalter nach einem der Ansprüche 1 bis 9, dadurch gekennzeichnet, daß das Schaltglied (14) über eine federbelastete Kontaktrolle (16) mit dem Kontaktträgereinsatz (3) in Verbindung steht.

## Claims

1. Electrical switch, more especially a steering column switch for automotive vehicles, having a switching lever (10), which is mounted in the switch housing (12), for switching at least one electrical switching circuit, the switching lever (10) being provided with a spring-loaded push-button (23) at its free end to actuate an additional electrical switching circuit, characterised in that the push-button (23) is in active communication with a pivotally mounted transverse lever (18), which lies in the axis, of rotation (6) of the switching lever (10) and is connected at its pivotable end to a spring-loaded switching member (14), which actuates connection contacts (4).

2. Electrical switch according to claim 1, characterised in that the push-button (23) has an internal sleeve (25), which is disposed in a displaceable and non-twistable manner on the shaft of the switching lever (10) and forms the switch handle (26) with an outer covering.

3. Electrical switch according to claims 1 and 2, characterised in that the push-button (23) has, in the internal sleeve (25), a central pin (45) which is supported in opposition to the pressure of a compression spring (24) disposed in the shaft of the switching lever (10).

4. Electrical switch according to one of claims 1 to 3, characterised in that the ends (19, 20) of the transverse lever (18), which lies in the vertical axis of rotation (6) of the switching lever (10), have a spherical configuration and are each mounted in an appropriate receiving means (21) in the upper housing half (2) and in an appropriate receiving means in the switching member (14).

5. Electrical switch according to one of claims 1 to 4, characterised in that the free end of the push-rod (22) abuts against the central region of the transverse lever (18).

6. Electrical switch according to one of claims 1 to 5, characterised in that the axially offset push-rod (22) is disposed in the switching lever (10) close to the axis and has an extension member (42), which is supported on a spring (39) guided in the switching lever (10).

7. Electrical switch according to one of claims 1 to 6, characterised in that the switching member (14) communicates with locking means (34, 38), which fix its switching position.

8. Electrical switch according to one of claims 1 to 7, characterised in that the locking means (34 to 38) substantially comprise a heart-shaped cam (38) and a resiliently displaceable locking lever (34), which communicates with said cam and is provided with locking pins (35).

9. Electrical switch according to one of claims 1 to 8, characterised in that the switching member (14) is horizontally displaceably accommodated in the lower housing half (1) in opposition to the force of a spring (15).

10. Electrical switch according to one of claims 1 to 9, characterised in that the switching member (14) communicates with the contact carrier insert (3) via a spring-loaded contact roller (16).

## Revendications

1. Commutateur électrique, en particulier commutateur de colonne de direction pour véhicule automobile, comportant un levier de commutation (10) monté dans le boîtier de commutateur (1,2) pour la commutation d'au moins un circuit électrique, le levier de commutation (10) portant à son extrémité libre un bouton-poussoir (23) rappelé par ressort pour la sollicitation d'un autre circuit électrique, caractérisé en ce que le bouton-poussoir (23) est en liaison active, par une bielle (22) rappelée par ressort, avec un levier transversal (18) monté pivotant, situé dans l'axe de rotation (6) du levier de commutation (10), lequel levier transversal est relié, à son extrémité pivotante, à un organe de commutation (14) rappelé par ressort, agissant sur un contact de connexion (4).

2. Commutateur électrique selon la revendication 1, caractérisé en ce que le bouton-poussoir (22) présente une douille intérieure (25), qui est placée coulissante et de manière à ne pouvoir tourner sur la tige du levier de commutation (10) et forme avec un gainage extérieur, la poignée de commutateur (26).

3. Commutateur électrique selon les revendications 1 et 2, caractérisé en ce que le bouton-poussoir (23) présente, dans la douille intérieure (25), un téton central (45), qui prend appui contre la pression d'un ressort de pression (24) placé dans la tige du levier de commutation (10).

4. Commutateur électrique selon l'une des revendications 1 à 3, caractérisé en ce que les extrémités (19, 20) du levier transversal (18), situé dans l'axe de rotation vertical (6) du levier de commutation (10), sont sphériques, et sont montées respectivement dans un logement correspondant (21) dans le demi-boîtier supérieur (2) ainsi que dans un logement correspondant dans l'organe de commutation (14).

5. Commutateur électrique selon l'une des revendications 1 à 4, caractérisé en ce que l'extrémité libre de la bielle (22) s'applique contre la zone centrale du levier transversal (18).

6. Commutateur électrique selon l'une des revendications 1 à 5, caractérisé en ce que la bielle (22) étagée axialement est placée au voisinage de l'axe dans le levier de commutation (10) et présente un appendice (42), qui prend appui contre un ressort (39) guidé dans le levier de commutation (10).

7. Commutateur électrique selon l'une des revendications 1 à 7, caractérisé en ce que l'organe de commutation (14) est en liaison avec des moyens d'arrêt (34, 38) fixant sa position de commutation.

8. Commutateur électrique selon l'une des revendications 1 à 7, caractérisé en ce que les moyens d'arrêt (34 à 38) sont constitués pour l'essentiel d'une came en coeur (38) et d'un levier d'arrêt (34) mobile à téton d'arrêt (35), formant ressort, en liaison avec celle-ci.

9. Commutateur électrique selon l'une des revendications 1 à 8, caractérisé en ce que l'organe de commutation (14) est logé de manière à coulisser horizontalement dans le demi-boîtier inférieur (1), à l'encontre de la force d'un ressort (15).

10. Commutateur électrique selon l'une des revendications 1 à 9, caractérisé en ce que l'organe de commutation (14) est en liaison, par un galet de contact (16) rappelé par ressort, avec l'insert de support de contact (3).
